# FASCICULE DE BREVET EUROPEEN

(11) **EP 3 005 498 B1**
(45) Date de publication et mention de la délivrance du brevet: **07.03.2018**
(21) Numéro de dépôt: 14732262.2
(22) Date de dépôt: 20.05.2014
(51) Int. Cl.: H01S 3/07, H01S 3/0941, H01S 3/16, H01S 3/06

(54) **SYSTEME D'AMPLIFICATION LASER A DISQUES EPAIS ET APPLICATIONS**
LASERVERSTÄRKUNGSSYSTEM FÜR DICKE PLATTEN UND VERWENDUNGEN DAVON
THICK DISC LASER AMPLIFICATION SYSTEM AND USES THEREOF

(30) Priorité: 04.06.2013 FR 1301266
(43) Date de publication de la demande: 13.04.2016
(73) Titulaire: Compagnie Industrielle des Lasers Cilas, 45100 Orléans (FR); ArianeGroup SAS, 75015 Paris (FR)
(72) Inventeur: MONTAGNE, Jean-Eucher, F-45000 Orleans (FR); AUROUX, Sandrine, F-45100 Orleans (FR); ESMILLER, Bruno, F-78670 Villaine Sur Seine (FR)
(74) Mandataire: Gevers & Orès
(86) Numéro de dépôt international: PCT/FR2014/051167
(87) Numéro de publication internationale: WO 2014/195595

(56) Documents cités:
- EP-A2- 2 182 598
- WO-A1-2005/091447
- DE-A1- 19 541 020
- US-A- 5 148 441
- US-A1- 2004 095 975
- US-A1- 2006 182 162
- US-A1- 2008 175 288
- ALDO ANTOGNINI ET AL: "Thin-Disk Yb:YAG Oscillator-Amplifier Laser, ASE, and Effective Yb:YAG Lifetime", IEEE JOURNAL OF QUANTUM ELECTRONICS, IEEE SERVICE CENTER, PISCATAWAY, NJ, USA, vol. 8, no. 8, 1 août 2009 (2009-08-01), pages 993-1005, XP011264011, ISSN: 0018-9197
- MUKHIN I ET AL: "One kilohertz cryogenic disk laser with high average power", DIODE-PUMPED HIGH ENERGY AND HIGH POWER LASERS; ELI: ULTRARELATIVISTIC LASER-MATTER INTERACTIONS AND PETAWATT PHOTONICS; AND HIPER: THE EUROPEAN PATHWAY TO LASER ENERGY, SPIE, 1000 20TH ST. BELLINGHAM WA 98225-6705 USA, vol. 8080, no. 1, 5 mai 2011 (2011-05-05), pages 1-13, XP060014767, DOI: 10.1117/12.886745

## Description

La présente invention concerne un système d'amplification laser, et des applications d'un tel système, notamment un amplificateur et un oscillateur.

Un système d'amplification laser comporte au moins un élément (ou milieu) actif (ou amplificateur), auquel est associé un dispositif de pompage. Cet élément amplificateur comprend un matériau dopé susceptible d'absorber un faisceau de pompage émis par un dispositif de pompage pour amplifier un faisceau laser.

Le document US2004095975 A1 décrit un système d'amplification laser impulsionnel comportant une pluralité de disques amplificateurs fins dopés au Néodyme et un élément de dissipation thermique face arrière.

Le système d'amplification peut comporter des disques amplificateurs dopés à l'Ytterbium (Yb). A titre d'exemple, on peut citer les articles suivants relatifs à des lasers à disques Yb:YAG, de type impulsionnel :
- un article intitulé "14 J / 2 Hz Yb3+:YAG diode pumped solid state laser chain", de Thierry Gonçalvès-Novo, Daniel Albach, Bernard Vincent, Mikayel Arzakantsyan et Jean-Christophe Chanteloup, publié dans « OPTICS EXPRESS » Vol. 21, No. 1, p. 855-866 (14 janvier 2013) ;
- un article intitulé "Pulsed opération of a high average power Yb:YAG thin-disk multipass amplifier" de M. Schulz, R. Riedel, A. Willner, S. Düsterer, M. J. Prandolini, J. Feldhaus, B. Faatz, J. Rossbach, M. Drescher et F. Tavella, publié dans « OPTICS EXPRESS » Vol. 20, No. 5, p. 5038-5043 (27 février 2012) ; et
- un article intitulé "Thin-Disk Yb:YAG Oscillator-Amplifier Laser, ASE, and Effective Yb:YAG Lifetime" de Antognini, A. ; Schuhmann, K. ; Amaro, F.D. ; Biraben, F. ; Dax, A. ; Giesen, A. ; Graf, T. ; Hansch, T.W. ; Indelicato, P. ; Julien, L. ; Cheng-Yang Kao ; Knowles, P.E. ; Kottmann, F. ; Le Bigot, E. ; Yi-Wei Liu ; Ludhova, L. ; Moschuring, N. ; Mulhauser, F. ; Nebel, T. ; Nez, F. ; Rabinowitz, P. ; Schwob, C. ; Taqqu, D. et Pohl, R, publié dans « IEEE Journal of Quantum Electronics » 45, p. 993 - 1005 (2009),

De tels disques dopés à l'Ytterbium présentent une densité de saturation qui se situe autour de 10 *J.cm*⁻²*.* Pour en extraire l'énergie, deux impulsions ne peuvent donc simultanément se chevaucher sans risque de dommage vis-à-vis de la tenue au flux. Typiquement, la distance entre deux passages sur un disque est dans ce cas supérieure à 1 mètre. L'architecture obtenue présente alors un encombrement important.

La présente invention concerne un système d'amplification laser qui permet notamment de remédier à cet inconvénient.

A cet effet, selon l'invention, ledit système d'amplification laser, du type comportant :
- au moins un disque amplificateur ; et
- au moins un dispositif de pompage de type à semi-conducteur de préférence à diodes, générant un faisceau de pompage pour ledit disque amplificateur,
est remarquable en ce que :
- le disque amplificateur est un disque amplificateur épais, et il présente une première face qui est réfléchissante aux longueurs d'onde à la fois d'un faisceau laser qui est de type impulsionnel et d'un faisceau de pompage du dispositif de pompage ;
- ledit système d'amplification laser comporte, de plus, au moins un élément de dissipation thermique sur lequel est solidarisée la première face dudit disque amplificateur ; et
- la fluence de saturation du milieu actif du disque amplificateur est inférieure ou égale à 3 *J.cm*⁻²*.*

De préférence, ledit système d'amplification laser comporte une pluralité de disques amplificateurs. De plus, dans un mode de réalisation préféré, ledit ou lesdits disques amplificateurs sont dopés au Néodyme (Nd).

Grâce aux caractéristiques précitées, le système d'amplification laser conforme à l'invention présente une densité de saturation qui est beaucoup plus faible que dans les cas usuels avec un dopage à l'Ytterbium (par exemple 0,7 *J.cm*⁻² pour Nd :YAG), et permet donc un chevauchement des impulsions, dont la densité individuelle est plus faible, ce qui rend possible un montage à disques de dix à cent fois plus compact que les systèmes usuels, en impulsionnel.

De préférence, ledit système d'amplification laser comporte une pluralité de disques amplificateurs épais, qui sont :
- soit prévus sur un seul et même élément de dissipation thermique ;
- soit répartis sur une pluralité d'éléments de dissipation thermique faisant partie dudit système d'amplification laser.

Le système d'amplification laser conforme à l'invention repose donc sur l'utilisation de disques épais, dopés de préférence au Néodyme et refroidis. Dans le cadre de la présente invention, un disque dit « épais » présente une épaisseur importante (à la différence d'un disque amplificateur usuel dit « mince »), épaisseur qui est notamment supérieure à 2 mm. De plus, de préférence, l'épaisseur d'un disque épais est supérieure à 20% du diamètre relatif à la forme dudit disque amplificateur, à savoir du diamètre pour un disque amplificateur de section circulaire, ou du diamètre du cercle entourant et englobant le disque amplificateur en cas de section de forme différente.

Par opposition aux matériaux dopés à l'Ytterbium, dont l'élévation de température diminue fortement l'efficacité, les matériaux dopés au Néodyme permettent de fonctionner efficacement pour des températures élevées (supérieures à 100°C), grâce au caractère quatre niveaux de ces matériaux. Cette caractéristique limite en pratique l'utilisation des disques dopés à l'Ytterbium à des épaisseurs de l'ordre de 100µm. Cette propriété rend, en revanche, possible l'utilisation de disques épais dopés au Néodyme dans des configurations à forte puissance. Les disques épais présentent l'intérêt de permettre un gain longitudinal (qui est utile) du même ordre de grandeur que le gain transverse (qui, lui, génère des effets parasites). De cette manière, à la fois l'énergie stockée et la facilité à l'extraire sont grandement augmentées.

Ainsi, grâce à l'invention, on obtient un système d'amplification laser qui permet, à la fois, de générer une forte puissance moyenne et une forte énergie.

En outre, ledit système d'amplification laser peut présenter au moins certaines des caractéristiques suivantes, prises en compte séparément ou en combinaison :
- il est configuré pour générer une circulation du faisceau laser qui passe d'un disque amplificateur à un autre disque amplificateur adjacent, par réflexion sur une surface qui permet à la fois la réflexion dudit faisceau laser et la transmission dudit faisceau de pompage ;
- il est configuré pour générer un double passage dans chaque disque amplificateur, en cas d'application à un amplificateur ;
- ledit dispositif de pompage est configuré pour générer un pompage homogène, afin notamment de garantir une bonne qualité spatiale du faisceau de sortie du disque amplificateur. On considère qu'un pompage homogène est tel que la valeur locale du taux de pompage ne s'éloigne pas, de plus ou moins 10%, de la valeur moyenne, en dehors d'une zone périphérique du disque amplificateur (cette zone périphérique représentant généralement 15%, voire 25%, de la surface totale) ;
- ledit dispositif de pompage est configuré pour générer un pompage sur plus de 80% de la surface d'une seconde face de chacun des disques amplificateurs ;
- ledit système est configuré pour que le trajet optique du faisceau laser entre deux disques amplificateurs est inférieur à quinze fois le diamètre d'un disque amplificateur ;
- chaque disque amplificateur est pourvu d'une zone périphérique configurée pour absorber une émission spontanée amplifiée ;
- chaque disque amplificateur comprend une seconde face, dont la surface est supérieure ou égale à celle de ladite première face, et présente une forme périphérique qui épouse la trace du faisceau laser ; et
- les impulsions du faisceau laser de type impulsionnel se recouvrent temporellement dans les disques amplificateurs.

La présente invention concerne également un oscillateur qui comporte au moins un système d'amplification laser tel que précité.

Elle concerne, en outre, un amplificateur qui comporte au moins un tel système d'amplification laser.

Les figures du dessin annexé feront bien comprendre comment l'invention peut être réalisée. Sur ces figures, des références identiques désignent des éléments semblables.
La figure 1 illustre schématiquement des éléments d'un système d'amplification laser conforme à l'invention.
La figure 2 est un exemple schématique d'un système d'amplification laser conforme à l'invention.
Les figures 3A et 3B sont des schémas permettant d'illustrer les avantages d'un disque amplificateur conique.

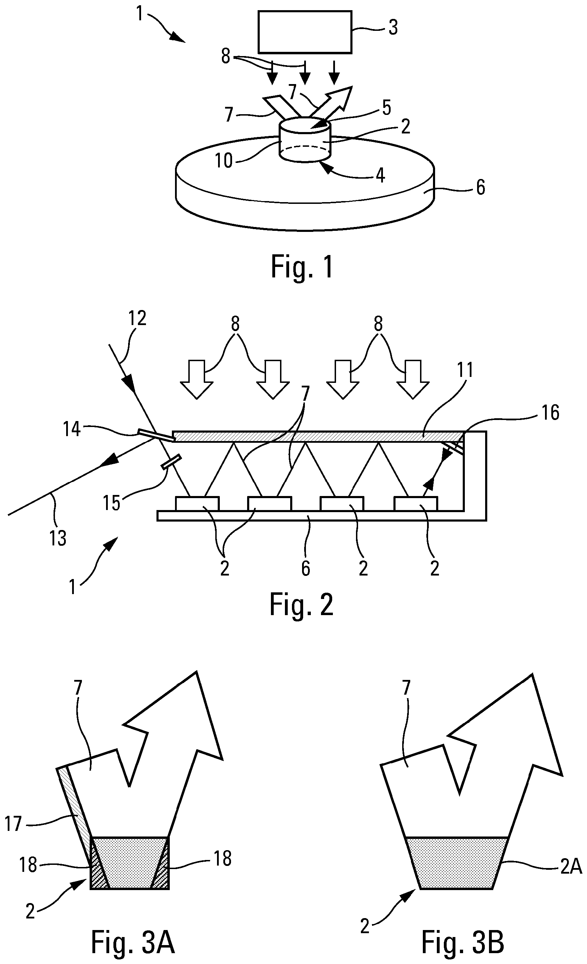

Le système d'amplification laser 1 conforme à l'invention et représenté schématiquement sur la figure 1, est destiné à réaliser une amplification laser.

Ce système d'amplification laser 1 est du type comportant :
- au moins un disque amplificateur 2 ; et
- au moins un dispositif de pompage 3 de type à semi-conducteur, de préférence à diodes, générant un faisceau de pompage 8 pour ledit ou lesdits disques amplificateurs 2.

Selon l'invention :
- chaque disque amplificateur 2 est un disque amplificateur épais, dopé de préférence au Néodyme, et il présente une première face 4 qui est (hautement) réfléchissante à la longueur d'onde du faisceau laser 7 traversant le système d'amplification laser 1, qui est de type impulsionnel, et à celle du faisceau de pompage 8 du dispositif de pompage 3 ;
- ledit système d'amplification laser 1 comporte, de plus, au moins un élément de dissipation thermique 6 sur lequel est solidarisée la première face 4 dudit disque amplificateur 2 ; et
- la fluence de saturation du milieu actif du disque amplificateur 2 est inférieure ou égale à 3 *J.cm*⁻²*.*

Le système 1 conforme à l'invention présente ainsi une densité de saturation qui est beaucoup plus faible (par exemple 0,7 *J.cm*⁻² pour Nd :YAG), que dans les cas avec un dopage à l'Ytterbium, et permet un chevauchement des impulsions, dont la densité individuelle est plus faible, ce qui rend possible un montage à disques de dix à cent fois plus compact que les systèmes usuels, en impulsionnel.

De préférence, ledit système d'amplification laser 1 comporte une pluralité de tels disques amplificateurs épais 2, qui sont agencés :
- soit sur un seul et même élément de dissipation thermique 6 ;
- soit sur une pluralité d'éléments de dissipation thermique.

Le ou les disques amplificateurs 2 du système d'amplification laser 1 sont refroidis par un ou plusieurs éléments de dissipation thermique 6 de manière à garantir une bonne qualité spatiale du faisceau laser amplifié par ce ou ces disques amplificateurs 2 pompés.

Chacun desdits disques amplificateurs 2 est dopé de préférence au Néodyme, et il présente, de plus, une seconde face 5 (opposée à ladite première face 4 et faisant face au faisceau de pompage 8) qui est pourvue d'un traitement antireflet.

Dans le cadre de la présente invention, un disque amplificateur 2 dit « épais » présente une épaisseur importante (à la différence d'un disque amplificateur usuel dit « mince »), qui est notamment supérieure à 2 mm. De préférence, l'épaisseur d'un disque amplificateur 2 épais est supérieure à 20% du diamètre relatif audit disque amplificateur 2, à savoir du diamètre pour un disque amplificateur de section circulaire, ou du diamètre du cercle entourant et englobant le disque amplificateur en cas de section de forme différente.

Par opposition aux matériaux dopés à l'Ytterbium, dont l'élévation de température diminue fortement l'efficacité, les matériaux dopés au Néodyme permettent de fonctionner efficacement pour des températures élevées (supérieures à 100°C), grâce au caractère quatre niveaux de ces matériaux. Cette caractéristique limite en pratique l'utilisation des disques dopés à l'Ytterbium à des épaisseurs de l'ordre de I00µm. Cette propriété rend, en revanche, possible l'utilisation de disques amplificateurs 2 épais dopés au Néodyme dans des configurations à forte puissance. Les disques amplificateurs 2 épais possèdent l'intérêt de permettre un gain longitudinal (qui est utile) du même ordre de grandeur que le gain transverse (qui, lui, génère des effets parasites). De cette manière, à la fois l'énergie stockée et la facilité à l'extraire sont grandement augmentées. Ainsi, le système d'amplification laser 1 conforme à l'invention permet, à la fois, de générer une forte puissance moyenne et une forte énergie.

Les disques amplificateurs 2 du système 1, qui peuvent être identiques ou différents, sont de préférence coniques ou de section circulaire ou elliptique.

La face réfléchissante 4 de chaque disque amplificateur 2 étant accolée à un élément de dissipation thermique 6, le disque amplificateur 2 est refroidi de telle sorte que le gradient de température dans chaque disque amplificateur 2 est à peu près parallèle à la direction du faisceau laser 7 le traversant. De plus, de préférence, les impulsions du faisceau laser 7 de type impulsionnel se recouvrent temporellement dans les disques amplificateurs 2.

Par ailleurs, pour remédier aux effets négatifs d'une émission spontanée amplifiée, de type ASE (pour « Amplified Spontaneous Emission » en anglais), sur le gain et donc sur l'énergie extraite des disques amplificateurs 2, chaque disque amplificateur 2 est pourvu d'une zone périphérique 10 qui est configurée pour absorber les rayonnements de fréquences égales à celle d'une émission spontanée amplifiée, ce qui permet de limiter ces effets et améliore donc le rendement des disques amplificateurs 2. Pour ce faire, ladite zone périphérique 10 peut comporter une couche absorbante.

Par ailleurs, notamment pour garantir une bonne qualité spatiale du faisceau de sortie d'un disque amplificateur 2, ledit dispositif de pompage 3 est configuré pour générer un pompage homogène. On considère qu'un pompage homogène est tel que la valeur locale du taux de pompage ne s'éloigne pas de plus ou moins 10% de la valeur moyenne, en dehors d'une zone périphérique du disque amplificateur 2 (cette zone périphérique représentant généralement 15%, voire 25%, de la surface totale de la face 5).

De plus, ledit dispositif de pompage 3 est configuré pour générer un pompage sur plus de 80% de la surface de la face 5 de chacun desdits disques amplificateurs 2, ce qui induit une charge thermique homogène et de faibles distorsions.

Par ailleurs, comme représenté sur la figure 2, le système 1 est configuré pour générer une circulation du faisceau laser 7 qui passe d'un disque amplificateur 2 à un autre disque amplificateur 2 adjacent, par réflexion sur une surface 11 qui permet à la fois la réflexion dudit faisceau laser 7 et la transmission dudit faisceau de pompage 8. De plus, un mode de réalisation particulier présente au moins certaines des caractéristiques suivantes :
- ladite surface 11 comprend au moins un miroir dichroïque, qui comprend des zones antireflets et des zones réfléchissantes. De préférence, ladite surface 11 comprend un seul miroir dichroïque qui est commun à l'ensemble des disques amplificateurs 2 ;
- lesdits disques amplificateurs 2 sont tous agencés dans un même plan sur un support qui est commun auxdits disques amplificateurs 2 et qui comprend ledit élément de dissipation thermique 6 ;
- ledit système 1 est configuré pour générer un double passage par trajet dans chaque disque amplificateur 2 ; et
- ledit système 1 est configuré pour que le trajet optique du faisceau laser 7 entre deux disques amplificateurs 2 est inférieur à quinze fois le diamètre d'un disque amplificateur 2.

Sur cette figure 2, on a représenté un exemple de système d'amplification laser 1 compact, susceptible d'être obtenu grâce à l'invention. Le nombre et la dimension des disques amplificateurs épais 2 dépendent de l'énergie à atteindre. Par exemple, quatre disques épais 2, de diamètre 8 mm et d'épaisseur 4 mm, permettent d'atteindre 400 mJ à partir d'une énergie incidente de 5 mJ. Et une énergie de sortie de 10 J à partir d'une énergie incidente de 400 mJ peut être obtenue à partir d'un système d'amplification laser comprenant cinq disques épais 2 de diamètre 35 mm et d'épaisseur 12 mm.

Comme représenté sur la figure 2, les disques amplificateurs 2 sont pompés par le dessus à travers le miroir dichroïque 11. Le faisceau incident 12 fait un aller-retour dans le système 1 (à l'aide d'un miroir 16 hautement réfléchissant), en zigzagant entre les faces réfléchissantes des disques amplificateurs 2 et le miroir dichroïque 11 (faisceau laser 7), et ressort du système 1 sous forme d'un faisceau amplifié 13. Le miroir dichroïque 11 est doté, alternativement, de traitements hautement réfléchissants et de traitements antireflets à la longueur d'onde du faisceau laser 7.

Le faisceau amplifié 13 est extrait grâce à l'association d'un polariseur 14 et d'une lame quart d'onde 15. La lame quart d'onde 15 est utilisée en double passage. Elle est, de ce fait, équivalente à une lame demi-onde et permet de faire tourner la polarisation. Cette lame 15 peut être remplacée par un rotateur de Faraday, dont l'avantage est de compenser la biréfringence des disques.

Dans un mode de réalisation préféré, l'élément de dissipation thermique 6 (sur lequel sont fixés tous les disques amplificateurs 2), le miroir dichroïque 11, le miroir 16 hautement réfléchissant et le polariseur 14 sont solidarisés, de façon à garantir une robustesse du pointage du faisceau de sortie 13 face aux perturbations environnementales (vibrations).

Le faisceau laser 7 est dans cette configuration incliné par rapport à la normale aux disques 2. Cette inclinaison peut être de quelques degrés à plus de 10 degrés, et peut induire une diaphragmation du faisceau signal si celui-ci est de dimension égale au disque 2, ainsi qu'une limitation de la zone vue par le faisceau dans le disque comme illustré sur la figure 3A. Sur cette figure 3A, on a représenté une partie 17 du faisceau diaphragmé et des zones pompées 18 non utilisées d'un disque amplificateur 2. Une solution pour maximiser le recouvrement entre le faisceau et la zone pompée du disque amplificateur 2 en évitant des diaphragmations est de disposer de disques 2A de forme conique (adaptée aux caractéristiques du faisceau 7) comme représenté sur la figure 3B. Pour les mêmes raisons, le disque amplificateur peut également être de section elliptique, le grand axe de l'ellipse étant dans le plan de zigzag du faisceau amplifié.

Ainsi, de préférence, chaque disque amplificateur 2 :
- comprend une face 5 supérieure, dont la surface est supérieure ou égale à celle de la face inférieure 4 ; et
- présente une forme périphérique qui épouse la trace du faisceau laser 7, telle que la forme conique de la figure 3B.

Grâce aux caractéristiques précitées, on peut obtenir un système 1 très compact. A titre d'illustration, un système d'amplification de 400mJ peut avoir les dimensions suivantes : 80 mm de large sur 60 mm de haut.

## Revendications

1. Système d'amplification laser, du type comportant :
- une pluralité de disques amplificateurs (2), chacun desdits disques amplificateurs (2) présentant une première face (4) qui est réfléchissante aux longueurs d'onde à la fois d'un faisceau laser (7) et d'un faisceau de pompage (8), la fluence de saturation du milieu actif des disques amplificateurs (2) étant inférieure ou égale à 3 *J.cm*⁻² ; et
- au moins un dispositif de pompage (3) de type à semi-conducteur, générant le faisceau de pompage (8) pour lesdits disques amplificateurs (2),
- le système d'amplification laser (1) comporte, de plus, au moins un élément de dissipation thermique (6) sur lequel est solidarisée la première face (4) desdits disques amplificateurs (2) ; et
**caractérisé en ce que**:
- chacun desdits disques amplificateurs étant un disque amplificateur épais d'épaisseur supérieure à 2 mm.
- ledit système d'amplification laser (1) est configuré pour que le trajet optique du faisceau laser (7) de type impulsionnel entre deux disques amplificateurs (2) est inférieur à quinze fois le diamètre d'un disque amplificateur (2).

2. Système selon la revendication 1,
**caractérisé en ce que** ledit système (1) est configuré pour générer une circulation du faisceau laser (7) qui passe d'un disque amplificateur (2) à un autre disque amplificateur (2) adjacent, par réflexion sur une surface (11) qui permet à la fois la réflexion dudit faisceau laser (7) et la transmission dudit faisceau de pompage (8).

3. Système selon l'une des revendications 1 et 2,
**caractérisé en ce que** ledit système (1) est configuré pour générer un double passage dans chaque disque amplificateur (2).

4. Système selon l'une quelconque des revendications précédentes,
**caractérisé en ce que** ledit dispositif de pompage (3) est configuré pour générer un pompage sur plus de 80% de la surface d'une seconde face (5) de chaque disque amplificateur (2).

5. Système selon l'une quelconque des revendications précédentes,
**caractérisé en ce que** chaque disque amplificateur (2) est dopé au Néodyme.

6. Système selon l'une quelconque des revendications précédentes,
**caractérisé en ce que** chaque disque amplificateur (2) est pourvu d'une zone périphérique (10) configurée pour absorber une émission spontanée amplifiée.

7. Système selon l'une quelconque des revendications précédentes,
**caractérisé en ce que** la fluence de saturation du milieu actif de chaque disque amplificateur (2) est inférieure à 1,5 *J.cm*⁻²*.*

8. Système selon l'une quelconque des revendications précédentes,
**caractérisé en ce que** ledit dispositif de pompage (3) est configuré pour générer un pompage homogène.

9. Système selon l'une quelconque des revendications précédentes,
**caractérisé en ce que** chaque disque amplificateur (2) comprend une seconde face (5), dont la surface est supérieure ou égale à celle de la première face (4), et il présente une forme périphérique qui épouse la trace du faisceau laser (7).

10. Système selon l'une quelconque des revendications précédentes,
**caractérisé en ce que** les impulsions du faisceau laser (7) de type impulsionnel se recouvrent temporellement dans chaque disque amplificateur (2).

11. Système selon l'une quelconque des revendications précédentes,
**caractérisé en ce que** l'épaisseur d'un disque amplificateur est supérieure à 20% du diamètre relatif à la forme du disque amplificateur.

12. Amplificateur laser,
**caractérisé en ce qu'**il comporte au moins un système d'amplification laser (1), tel que celui spécifié sous l'une quelconque des revendications 1 à 11.

13. Oscillateur laser,
**caractérisé en ce qu'**il comporte au moins un système d'amplification laser (1), tel que celui spécifié sous l'une quelconque des revendications 1 à 11.

## Patentansprüche

1. Laserverstärkungssystem des Typs, umfassend:
- mehrere Verstärkerscheiben (2), wobei jede der Verstärkerscheiben (2) eine erste Fläche (4) aufweist, die bei Wellenlängen sowohl eines Laserstrahls (7) als auch eines Pumpstrahls (8) reflektierend ist, wobei die Sättigungsfluenz des aktiven Mediums der Verstärkungsscheiben (2) kleiner als oder gleich 3 *J.cm*⁻² ist; und
- mindestens eine Pumpvorrichtung (3) vom Typ des Halbleiters, die den Pumpstrahl (8) für die Verstärkerscheiben (2) erzeugt,
- das Laserverstärkungssystem (1) weist ferner mindestens ein Wärmeableitungselement (6) auf, auf dem die erste Fläche (4) der Verstärkerscheiben (2) fest angebracht ist; und
**dadurch gekennzeichnet, dass**
- jede der Verstärkerscheiben eine dicke Verstärkungsscheibe mit einer Dicke von über 2 mm ist,
- das Laserverstärkungssystem (1) konfiguriert ist, damit der optische Weg des Laserstrahls (7) vom Impulstyp zwischen zwei Verstärkerscheiben (2) fünfzehn Mal kleiner als der Durchmesser einer Verstärkerscheibe (2) ist.

2. System nach Anspruch 1,
**dadurch gekennzeichnet, dass** das System (1) konfiguriert ist, um einen Umlauf des Laserstrahls (7) zu erzeugen, der von einer Verstärkerscheibe (2) zu einer benachbarten, anderen Verstärkerscheibe (2) durch Reflexion auf einer Oberfläche (11) überzugehen, die sowohl die Reflexion des Laserstrahls (7) als auch die Übertragung des Pumpstrahls (8) ermöglicht.

3. System nach einem der Ansprüche 1 und 2,
**dadurch gekennzeichnet, dass** das System (1) konfiguriert ist, um einen doppelten Durchgang in jeder Verstärkerscheibe (2) zu erzeugen.

4. System nach einem der vorhergehenden Ansprüche, **dadurch gekennzeichnet, dass** die Pumpvorrichtung (3) konfiguriert ist, um ein Pumpen auf mehr als 80 % der Oberfläche einer zweiten Fläche (5) von jeder Verstärkerscheibe (2) zu erzeugen.

5. System nach einem der vorhergehenden Ansprüche, **dadurch gekennzeichnet, dass** jede Verstärkerscheibe (2) mit Neodym dotiert ist.

6. System nach einem der vorhergehenden Ansprüche,
**dadurch gekennzeichnet, dass** jede Verstärkerscheibe (2) mit einem Randbereich (10) versehen ist, der konfiguriert ist, um eine verstärkte spontane Emission zu absorbieren.

7. System nach einem der vorhergehenden Ansprüche, **dadurch gekennzeichnet, dass** die Sättigungsfluenz des aktiven Mediums von jeder Verstärkungsscheibe (2) kleiner als 1,5 *J.cm*⁻² ist.

8. System nach einem der vorhergehenden Ansprüche,
**dadurch gekennzeichnet, dass** die Pumpvorrichtung (3) konfiguriert ist, um ein homogenes Pumpen zu erzeugen.

9. System nach einem der vorhergehenden Ansprüche,
**dadurch gekennzeichnet, dass** jede Verstärkerscheibe (2) eine zweite Fläche (5) aufweist, deren Oberfläche größer als oder gleich jener der ersten Fläche (4) ist, und sie eine Umfangsform aufweist, die sich an die Spur des Laserstrahls (7) anpasst.

10. Verfahren nach einem der vorhergehenden Ansprüche,
**dadurch gekennzeichnet, dass** sich die Pulse des Laserstrahls (7) vom Impulstyp in jeder Verstärkerscheibe (2) zeitlich überdecken.

11. System nach einem der vorhergehenden Ansprüche,
**dadurch gekennzeichnet, dass** die Dicke einer Verstärkerscheibe größer als 20 % des Durchmessers in Bezug auf die Form der Verstärkerscheibe ist.

12. Laserverstärker,
**dadurch gekennzeichnet, dass** er mindestens ein Laserverstärkungssystem (1) wie jenes, das in einem der Ansprüche 1 bis 11 spezifiziert ist, aufweist.

13. Laseroszillator,
**dadurch gekennzeichnet, dass** er mindestens ein Laserverstärkungssystem (1) wie jenes, das in einem der Ansprüche 1 bis 11 spezifiziert ist, aufweist.

## Claims

1. Laser amplification system, of the type comprising:
- a plurality of amplifier discs (2), each of said amplifier discs (2) having a first face (4) which is reflective at the wavelengths both of a laser beam (7) and of a pumping beam (8), the saturation flux of the active medium of the amplifier discs (2) being less than or equal to 3 *J.cm*⁻²; and
- at least one semiconductor-type pumping device (3), generating the pumping beam (8) for said amplifier discs (2),
- the laser amplification system (1) further comprises at least one heat dissipation element (6), to which the first face (4) of said amplifier discs (2) is rigidly connected; and **characterised in that**:
- each of said amplifier discs (2) being a thick amplifier disc with a thickness greater than 2 mm,
- said laser amplification system (1) is configured so that the optical path of the pulsed-type laser beam (7) between two amplifier discs (2) is less than fifteen times the diameter of an amplifier disc (2).

2. System according to claim 1,
**characterised in that** said system (1) is configured to generate a circulation of the laser beam (7) which passes from an amplifier disc (2) to another adjacent amplifier disc (2), by reflecting from a surface (11) which both allows said laser beam (7) to be reflected and allows said pumping beam (8) to be transmitted.

3. System according to any of claims 1 and 2,
**characterised in that** said system (1) is configured to generate a double pass in each amplifier disc (2).

4. System according to any of the preceding claims,
**characterised in that** said pumping device (3) is configured to generate pumping over more than 80 % of the surface area of a second face (5) of each amplifier disc (2).

5. System according to any of the preceding claims,
**characterised in that** each amplifier disc (2) is doped with neodymium.

6. System according to any of the preceding claims,
**characterised in that** each amplifier disc (2) is provided with a peripheral region (10) that is designed to absorb an amplified spontaneous emission.

7. System according to any of the preceding claims,
**characterised in that** the saturation flux of the active medium of each amplifier disc (2) is less than 1.5 *J.cm*⁻²*.*

8. System according to any of the preceding claims,
**characterised in that** said pumping device (3) is configured to generate homogeneous pumping.

9. System according to any of the preceding claims,
**characterised in that** each amplifier disc (2) comprises a second face (5), of which the surface area is greater than or equal to that of the first face (4), and it has a peripheral shape which fits to the trace of the laser beam (7).

10. System according to any of the preceding claims,
**characterised in that** the pulses of the pulsed-type laser beam (7) temporarily overlap in each amplifier disc (2).

11. System according to any of the preceding claims,
**characterised in that** the thickness of an amplifier disc (2) is greater than 20% of the diameter relating to the shape of said amplifier disc (2).

12. Laser amplifier,
**characterised in that** it comprises at least one laser amplification system (1) such as that specified in any of claims 1 to 11.

13. Laser oscillator,
**characterised in that** it comprises at least one laser amplification system (1) such as that specified in any of claims 1 to 11.
